# EUROPEAN PATENT APPLICATION

(11) **EP 4 614 415 A1**
(43) Date of publication of application: **10.09.2025**
(21) Application number: 25162352.6
(22) Date of filing: 07.03.2025
(51) Int. Cl.: G06Q 20/06, G06Q 20/22, G06Q 20/36, G06Q 20/38, G06Q 20/40

(54) **SYSTEM FOR SECURE SELF DEPOSIT AND STORAGE OF DIGITAL ASSETS**

(30) Priority: 07.03.2024 US 202418598512
(71) Applicant: Marinov, Angel, Miami, Florida 33180 (US)
(72) Inventor: Marinov, Angel, Miami, Florida 33180 (US)
(74) Representative: Pritzlaff, Stefanie Lydia

(57) **Abstract**

Systems for securely self-depositing and storing digital assets. One such system may include a processor disposed in connection with a memory having computer-readable instructions stored thereon and configured to execute a storage system. The storage system itself may comprise an initiation module, a verification module, a bailee module, a contracting module, a vault module, and a withdrawal module. The verification module may comprise a whitelisting submodule. The processor may be configured to execute a storage system via a software application configured to be executed on a memory of a client device, the software application operative to: register a user; verify the identity of the user; receive at least one digital asset; execute at least one smart contract between the user and the custodian; store the at least one digital asset according to the at least one smart contract; and return the at least one digital asset to the user.

## Description

### BACKGROUND OF THE INVENTION

### Claim of Priority

The present Continuation-in-Part patent application hereby makes a claim of priority to an earlier filed non-provisional patent application having Serial No. 18/239,050 and a filing date of August 28, 2023 and an earlier filed and converted U.S. provisional patent application having Serial No. 63/401,514 and a filing date of August 26, 2022, both of which are hereby incorporated in their entireties.

### Field of the Invention

The present invention is directed to systems for securely self-depositing and storing digital assets.

### DESCRIPTION OF THE RELATED ART

In today's digital landscape, the safe, easy, and effective storage of digital assets continues to grow evermore paramount. Indeed, as more information is disposed within the internet, digital asset management systems continue to experience more loads, with increasing numbers of data types, and with a lack of sufficient means to store, protect, and provide such digital assets according to a user's needs. The recent inclusion of cryptocurrency as digital assets has only served to complicate the matter.

For instance, conventional digital asset storage systems rely on the activities of a custodian placed in the role of overseeing such digital asset storage and retrieval. Naturally, this role of custodian implicates a number of legal requirements, thus requiring the execution of a mutually agreed upon contract between the parties at issue. Of course, this requirement results in delays in data storage. And, because such a custodian is a natural person or some other juristic entity, there exists risk for the party requesting the digital asset storage. Indeed, in the event such custodian loses control over the digital assets to be stored, or even goes bankrupt, such digital assets may be unrecoverable for the party requesting such digital asset storage. Even further, conventional systems for the storage of digital assets typically pool together digital assets from a plurality of entities, akin to a bank, thereby generating further risks and delays for the party requiring storage.

As such, there is a need in the art for an invention which may provide at least one system for securely self-depositing and storing digital assets. Specifically, there is a need in the art of digital asset storage systems for a solution which: (1) mitigates, reduces, or otherwise vitiates the role of custodian in digital asset storage systems-thereby obviating the legal implications imposed by such a custodian and minimizing likely delays in data storage because of the same-(2) is configured to ensure the owner of any digital asset(s) remains the owner of the same throughout its storage; (3) is configured so as to ensure the party in interest may easily and securely be verified as the owner, thereby further minimizing delays in data storage; (4) is configured so as to ensure the party in interest may easily and quickly access its digital asset(s); and (5) is able to be easily integrated with operating systems present in most client devices, thereby ensuring the present invention can be used all around the world.

### SUMMARY OF THE INVENTION

In view of the disadvantages that come with the use of currently available systems for securely self-depositing and storing digital assets, the present invention is directed to at least one system for securely self-depositing and storing digital assets which, *inter alia,* mitigates, reduces, or otherwise vitiates the role of custodian in digital asset storage systems and which is configured to ensure the owner of any digital asset(s) remains the owner of the same throughout its storage.

As used herein, the term "wallet" can refer to one or more software programs and/or hardware devices that allow users to securely store, manage, and/or interact with one or more digital assets. Moreover, the term "hot wallet" can refer to a type of wallet that is connected to the internet and is readily accessible for online transactions, exchanges, and other activities (e.g., a wallet that is actively used for online transactions and trading). Likewise, the term "cold wallet" can refer to a type of wallet that is completely offline and disconnected from the internet, thereby providing a more secure option compared to its "hot" counterpart. Additionally, the term "hybrid wallet" can refer to a type of wallet that combines features of "hot" and "cold" wallets, thereby keeping a portion of a user's digital assets readily accessible for transactions and trading (i.e., features similar to a "hot" wallet) while simultaneously securely storing the bulk of a user's digital assets offline to protect the user from online threats (i.e., features similar to a "cold" wallet). Furthermore, the term "smart contract" can refer to a self-executing computer program-traditionally built on blockchain technology and designed for trustless and automated execution of agreements between parties-that automatically enforces and executes the terms of a contract when certain predefined conditions are met. In all of the foregoing, the phrases "hot wallet," "cold wallet," "hybrid wallet," and "smart contract" are described only by way of non-limiting example.

In more specific terms, the system for securely self-depositing and storing digital assets (the "storage platform") may comprise a processor disposed in connection with a memory having computer-readable instructions stored thereon. In at least one embodiment of the present invention, the processor may be configured to execute a storage system (e.g., a computer-implemented system such as a web or application-based platform) that may provide a variety of functionality. Such a storage system may comprise a variety of different subsystems and modules configured to provide a variety of functionality. By way of non-limiting example, the storage system may comprise an initiation module, a verification module, a bailee module, a contracting module, a vault module, and a withdrawal module.

As to embodiments of the present invention wherein the processor is configured to execute a storage system via an application-based platform (e.g., a software application) configured to be executed on a memory of a client device, the software application may be operative to: register a user; verify the identity of the user; receive at least one digital asset; execute at least one smart contract between the user and the custodian; store the at least one digital asset according to the at least one smart contract; and return the at least one digital asset to the user. By way of non-limiting example, the client device may include at least one of the following devices: mobile devices, such as mobile phones; tablet computers; laptop computers; PDAs; and wearables, such as smart watches. Additionally, in many embodiments of the present invention, and by way of non-limiting example, the software application may be a downloadable software application. As may be understood, and by way of non-limiting example, in embodiments wherein the software application is a downloadable software application (i.e., downloadable on the memory of the client device), the client device may be configured to communicate with other client devices over a network. Furthermore, in such embodiments wherein the client device is configured to communicate with other client devices over a network, the client device may also interact with an application server. In such embodiments wherein the processor is configured to execute a storage system via an application-based platform (e.g., a software application) configured to be executed on a memory of a client device, the software application-prior to receiving the at least one digital asset-is operative to emit a verification notification detectable immediately. By way of non-limiting example, the verification notification is a multi-factor authentication notification. Furthermore, in other such embodiments wherein the processor is configured to execute a storage system via an application-based platform (e.g., a software application) configured to be executed on a memory of a client device, the software application-prior to receiving the at least one digital asset-is operative to whitelist the user's wallet. By way of additional non-limiting example, prior to receiving the at least one digital asset, the software application is operative to whitelist the user's hot wallet.

With regard to the initiation module, in at least some embodiments of the present invention, the initiation module is configured to initiate a client-custodian like relationship between the parties at issue. More specifically, and by way of non-limiting example, the initiation module may be configured to register a user of the present invention. In at least one such embodiment wherein the present invention comprises an initiation module, the initiation module is configured to receive contact information, billing information, and information pertaining to the at least one digital asset related to the user. As will be described in further detail below, at least some embodiments of the present invention generally comprise both a front end and a back end, and in some such embodiments wherein the present invention generally comprises both a front end and a back end, the initiation module of the present invention facilitates the registration of a user via the initiation of a registration request by the front end and a response to the registration request by the back end. Additionally, in at least one such embodiment wherein the present invention comprises an initiation module, the initiation module may also facilitate a user's password reclamation for user authentication. In such embodiments wherein the initiation module facilitates user password reclamation, the front end may initiate a request to reset the user's password, the back end may initiate a request for a server component to send a form of correspondence (e.g., an email) to the user, and the user may interact with the correspondence, thereby reclaiming the user's password or altering the same-which ultimately may cause the front end to communicate with the back end to store the user's altered password. Furthermore, in at least some embodiments of the present invention, the initiation module is also operative to allow an already registered user of the present invention to login to the user's account. In such embodiments wherein the initiation module is operative to allow an already registered user to login to the user's account, the front end may initiate a login request, the back end may interact with the verification module (described in further detail immediately below) to verify the identity of the user, and the back end may respond to the front end-thereby allowing the already registered user to login to the user's account.

With regard to the verification module, in at least some embodiments of the present invention, the verification module is configured to verify the identity of the user. By way of non-limiting example, the verification module may be configured to utilize a plurality of means to afford such verification, such data scraping functionality, access to public records, and other similar means. In at least one embodiment of the present invention comprising the verification module, the front end may communicate with one or more of the back end; a cache, the cache operative to store recently accessed or frequently used data in a temporary manner (e.g., allowing for quicker retrieval and response times); and, in some instances, a verification component operative to leverage machine learning to detect document manipulation or forgery. By way of non-limiting example, and in such instances wherein the front end may communicate with one or more of the back end, the cache, and the verification component, the aforementioned components may, in some instances, communicate with one another to verify the identity of the user. In other instances, the front end may communicate with one or more of the back end; a first verification component; and a second verification component. **In** some embodiments of the present invention, however, the verification module may comprise a whitelisting submodule, the whitelisting submodule configured to further identify the identity of the user.

Subsequent to verification of the user by the verification module, at least some embodiments of the present invention may direct the storage system to proceed to a bailee module, which may be configured to receive at least one digital asset. More specifically, the bailee module may allow for a user to submit at least one digital asset to be stored by the storage system. By way of non-limiting example, the at least one digital asset may be one or more digital assets from the group comprising: cryptocurrencies, tokens (e.g., NFTs), digital securities, digital collectibles, virtual real estate, and digital commodities. By way of non-limiting example, the bailee module may be configured for receipt of a user wallet or some other device and/or storage structure upon which the at least one digital asset to be secured by the storage system are disposed. Similarly, and by way of additional non-limiting example, the bailee module may be configured to receive a length of time to store such at least one digital asset from the user, such as through the selection of one of a plurality of storage options provided by the custodian party.

The contracting module, on the other hand, may be configured to execute at least one smart contract between the user and at least one custodian. By way of non-limiting example, the at least one smart contract is configured to tie (e.g., define the terms of the arrangement between the user and the custodian party) both the user and the at least one custodian to a single wallet in an encoded manner without the need for coding by either party. In at least some embodiments of the present invention wherein the contracting module is configured to execute at least one smart contract between the user and the at least one custodian, each of the parties in interest participating in such a smart contract may be tied to the same person, wallet, and account. In such embodiments wherein the at least one smart contract is configured to tie both the user and the at least one custodian to a single wallet-and made by way of additional non-limiting example-only the user is configured to receive or send the at least one digital asset. Furthermore, and by way of additional non-limiting example, the at least one smart contract is recorded on a distributed ledger.

Subsequent to execution of the at least one smart contract between the parties at issue, and according to the terms recited therein, the user may provide the at least one digital asset to be stored to the custodian party via a vault module, the vault module specifically configured to store the at least one digital asset. By way of non-limiting example, the vault module may comprise a hot, cold, hybrid, or other storage technology on and/or used with a blockchain and/or other distributed ledger system. By way of additional non-limiting example, the vault module is configured to store the at least one digital asset according to a vault component consisting of one of the group selected from: hot storage, cold storage, and hybrid storage.

Accordingly, in view of the foregoing, and made by way of non-limiting example, the user may be the only party able to withdraw the at least one digital asset from the vault module according to the virtually protected loop formed via the executed smart contract between the parties. As may be understood, in at least some embodiments of the present invention, the at least one digital asset may be withdrawn via a withdrawal module, which may be employed by a user to withdraw the at least one digital asset at any time upon request. In at least one embodiment of the present invention comprising the withdrawal module, the withdrawal module generally facilitates the withdrawal of digital assets via the initiation of a withdrawal request by the front end and a variable response by the back end. Additionally, in at least one such embodiment wherein the present invention comprises a withdrawal module, the front end may communicate with one or more of the back end and, in some instances, a digital asset support component, the digital asset support component operative to enable the secure movement, storage, and issuance of digital assets. By way of non-limiting example, and in such instances wherein the front end may communicate with one or more of the back end and the digital asset support component, the aforementioned components may, in some instances, communicate with one another to ensure the secure withdrawal of digital assets. Alternatively, and made by way of non-limiting example, the withdrawal module may be configured to return the at least one digital asset to the user upon expiration or termination of the smart contract, according to the terms defined therein. In either instance, and made by way of additional non-limiting example, the verification module may again be utilized to verify the user via one or more of a variety of verification protocols.

These and other objects, features and advantages of the present invention will become clearer when the drawings as well as the detailed description are taken into consideration.

### BRIEF DESCRIPTION OF THE DRAWINGS

For a fuller understanding of the nature of the present invention, reference should be had to the following detailed description taken in connection with the accompanying drawings in which:
Figure 1 is a schematic representation in block form of one embodiment of the present invention.
Figure 2 is a schematic representation in block form of one system of the present invention.
Figure 3 is a schematic representation in block form of another embodiment of one system of the present invention.
Figure 4 is a schematic representation in block form of one system of the present invention.
Figure 5 is a schematic representation of one embodiment of the present invention in block form wherein the present invention is being utilized to purchase and/or acquire at least one digital asset.
Figure 6 is a schematic representation of one embodiment of the present invention in block form wherein the present invention is being utilized to exchange at least one native digital asset issued on a first blockchain for another at least one native digital asset issued on a second blockchain.
Figure 7 is a schematic representation of one embodiment of the present invention in block form wherein the present invention is being utilized to store at least one native digital asset.
Figure 8 is a schematic representation of one embodiment of the present invention in block form wherein the present invention is being utilized to exchange at least one native digital asset issued on a first blockchain for another at least one native digital asset issued on the same blockchain.
Figure 9 is a schematic representation of another embodiment of the present invention in block form wherein the present invention is being utilized to exchange at least one native digital asset issued on a first blockchain for another at least one native digital asset issued on the same blockchain.
Figure 10 is a schematic representation of one embodiment of the present invention in block form wherein the present invention is being utilized to withdraw at least one native digital asset.
Figure 11 is a schematic representation of one embodiment of the present invention in block form wherein the present invention is being utilized to withdraw at least one non-native digital asset.
Figure 12 is a schematic representation of one embodiment of the present invention in block form wherein the present invention is being utilized to withdraw at least one digital asset from a cold wallet.
Figure 13 is a schematic representation of one embodiment of the present invention in block form wherein the verification module is being utilized to verify a user.
Figure 14 is a schematic representation of another embodiment of the present invention in block form wherein the verification module is being utilized to verify a user.

Like reference numerals refer to like parts throughout the several views of the drawings.

### DETAILED DESCRIPTION OF THE PREFERRED EMBODIMENT

The invention now will be described more fully hereinafter with reference to the accompanying drawings in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

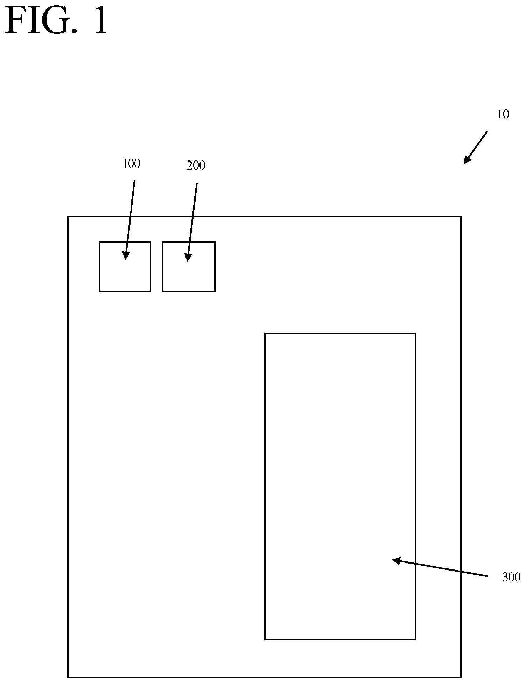

Turning now descriptively to the figures, FIG. 1 illustrates the system for securely self-depositing and storing digital assets (the "storage platform") 10 may comprise a processor 100 disposed in connection with a memory 200 having computer-readable instructions stored thereon. In at least one embodiment of the present invention, the processor may be configured to execute a storage system 300 (e.g., a computer-implemented system such as a web or application-based platform) that may provide a variety of functionality. Such a storage system 300 may comprise a variety of different subsystems and modules configured to provide a variety of functionality. By way of non-limiting example, the storage system may comprise an initiation module, a verification module, a bailee module, a contracting module, a vault module, and a withdrawal module.

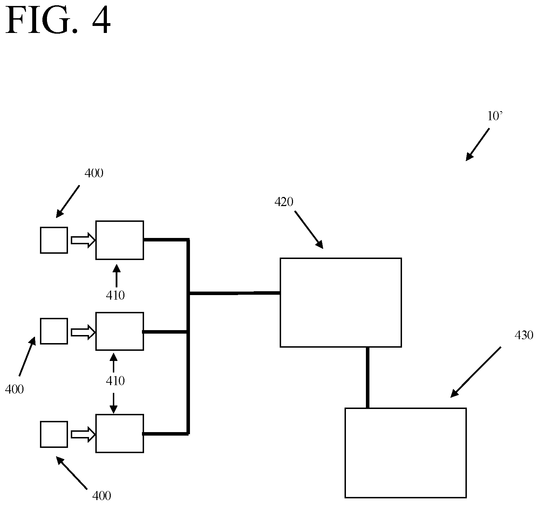

As to embodiments of the present invention wherein the processor is configured to execute a storage system via a software application 400 configured to be executed on a memory of a client device 410, seen in FIG. 4, the software application 400 may be operative to: register a user; verify the identity of the user; receive at least one digital asset; execute at least one smart contract between the user and the custodian; store the at least one digital asset according to the at least one smart contract; and return the at least one digital asset to the user. By way of non-limiting example, the client device 410 may include at least one of the following devices: mobile devices, such as mobile phones; tablet computers; laptop computers; PDAs; and wearables, such as smart watches. Additionally, in many embodiments of the present invention, and by way of non-limiting example, the software application 400 may be a downloadable software application. As may be understood, and by way of non-limiting example, in embodiments wherein the software application 400 is a downloadable software application (i.e., downloadable on the memory of the client device), the client device 410 may be configured to communicate with other client devices over a network 420. Furthermore, in such embodiments wherein the client device 410 is configured to communicate with other client devices over a network 420, the client device 410 may also interact with an application server 430. In such embodiments wherein the processor is configured to execute a storage system via a software application 400 configured to be executed on a memory of a client device 410, the software application 400-prior to receiving the at least one digital asset-is operative to emit a verification notification detectable immediately. By way of non-limiting example, the verification notification is a multi-factor authentication notification. Furthermore, in other such embodiments wherein the processor is configured to execute a storage system via a software application 400 configured to be executed on a memory of a client device 410, the software application 400-prior to receiving the at least one digital asset-is operative to whitelist the user's wallet. By way of additional non-limiting example, prior to receiving the at least one digital asset, the software application 400 is operative to whitelist the user's hot wallet.

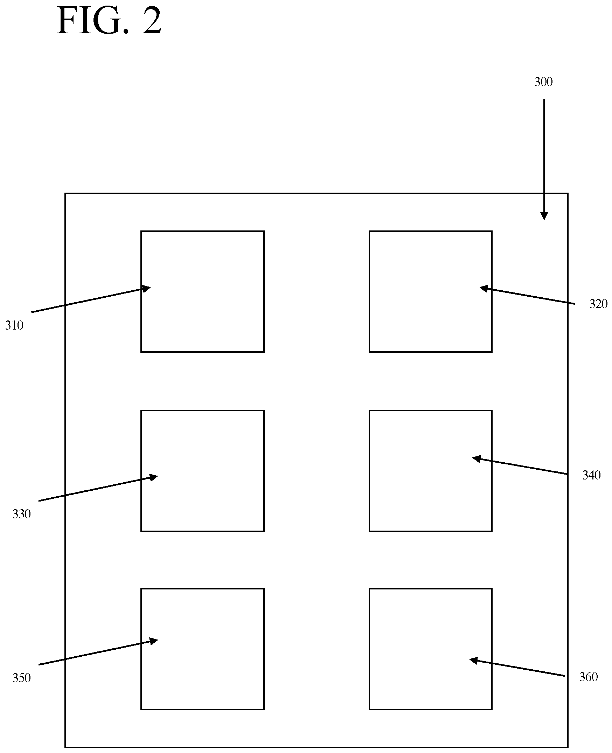

With regard to the initiation module 310, seen in FIGS. 2-3, in at least some embodiments of the present invention, the initiation module 310 is configured to initiate a client-custodian like relationship between the parties at issue. More specifically, and by way of non-limiting example, the initiation module 310 may be configured to register a user of the present invention. In at least one such embodiment wherein the present invention comprises an initiation module 310, the initiation module 310 is configured to receive contact information, billing information, and information pertaining to the at least one digital asset related to the user. As described herein, at least some embodiments of the present invention generally comprise both a front end and a back end, and in some such embodiments wherein the present invention generally comprises both a front end and a back end, the initiation module of the present invention facilitates the registration of a user via the initiation of a registration request by the front end and a response to the registration request by the back end. Additionally, in at least one such embodiment wherein the present invention comprises an initiation module, the initiation module may also facilitate a user's password reclamation for user authentication. In such embodiments wherein the initiation module facilitates user password reclamation, the front end may initiate a request to reset the user's password, the back end may initiate a request for a server component to send a form of correspondence (e.g., an email) to the user, and the user may interact with the correspondence, thereby reclaiming the user's password or altering the same-which ultimately may cause the front end to communicate with the back end to store the user's altered password. Furthermore, in at least some embodiments of the present invention, the initiation module is also operative to allow an already registered user of the present invention to login to the user's account. In such embodiments wherein the initiation module is operative to allow an already registered user to login to the user's account, the front end may initiate a login request, the back end may interact with the verification module (described in further detail immediately below) to verify the identity of the user, and the back end may respond to the front end-thereby allowing the already registered user to login to the user's account.

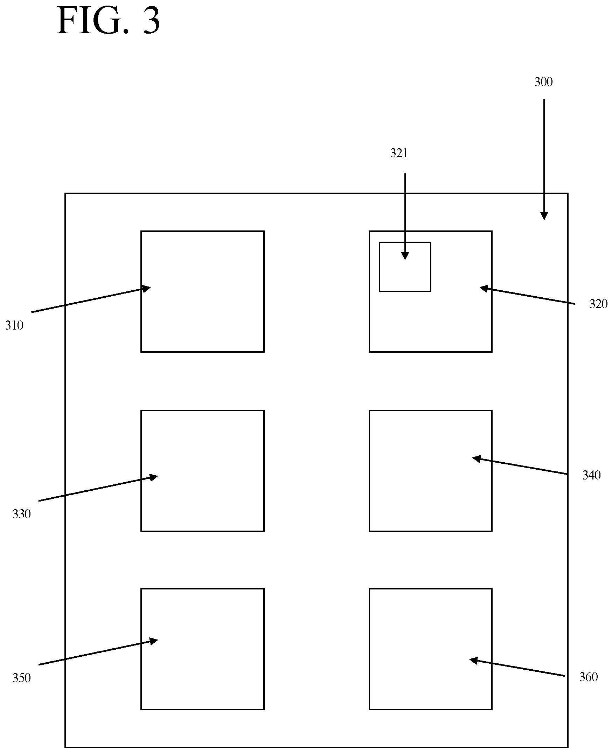

With regard to the verification module 320, seen in FIGS. 2-3, in at least some embodiments of the present invention, the verification module 320 is configured to verify the identity of the user. By way of non-limiting example, the verification module 320 may be configured to utilize a plurality of means to afford such verification, such data scraping functionality, access to public records, and other similar means. In at least one embodiment of the present invention comprising the verification module, the front end may communicate with one or more of the back end; a cache, the cache operative to store recently accessed or frequently used data in a temporary manner (e.g., allowing for quicker retrieval and response times); and, in some instances, a verification component operative to leverage machine learning to detect document manipulation or forgery. By way of non-limiting example, and in such instances wherein the front end may communicate with one or more of the back end, the cache, and the verification component, the aforementioned components may, in some instances, communicate with one another to verify the identity of the user. In other instances, the front end may communicate with one or more of the back end; a first verification component; and a second verification component. In some embodiments of the present invention, however, seen in FIG. 3, the verification module 320 may comprise a whitelisting submodule 321, the whitelisting submodule 321 configured to further identify the identity of the user.

Subsequent to verification of the user by the verification module **320,** seen in FIGS. 2-3, at least some embodiments of the present invention may direct the storage system to proceed to a bailee module **330,** which may be configured to receive at least one digital asset. More specifically, the bailee module **330** may allow for a user to submit at least one digital asset to be stored by the storage system **300.** By way of non-limiting example, the at least one digital asset may be one or more digital assets from the group comprising: cryptocurrencies, tokens (e.g., NFTs), digital securities, digital collectibles, virtual real estate, and digital commodities. By way of non-limiting example, the bailee module **330** may be configured for receipt of a user wallet or some other device and/or storage structure upon which the at least one digital asset to be secured by the storage system **300** are disposed. Similarly, and by way of additional non-limiting example, the bailee module **330** may be configured to receive a length of time to store such at least one digital asset from the user, such as through the selection of one of a plurality of storage options provided by the custodian party.

The contracting module **340,** on the other hand, seen in FIGS. 2-3, may be configured to execute at least one smart contract between the user and at least one custodian. By way of non-limiting example, the at least one smart contract is configured to tie (e.g., define the terms of the arrangement between the user and the custodian party) both the user and the at least one custodian to a single wallet in an encoded manner without the need for coding by either party. In at least some embodiments of the present invention wherein the contracting module is configured to execute at least one smart contract between the user and the at least one custodian, each of the parties in interest participating in such a smart contract may be tied to the same person, wallet, and account. In such embodiments wherein the at least one smart contract is configured to tie both the user and the at least one custodian to a single wallet-and made by way of additional non-limiting example-only the user is configured to receive or send the at least one digital asset. Furthermore, and by way of additional non-limiting example, the at least one smart contract is recorded on a distributed ledger.

Subsequent to execution of the at least one smart contract between the parties at issue, and according to the terms recited therein, the user may provide the at least one digital asset to be stored to the custodian party via a vault module **350,** seen in FIGS. 2-3, the vault module **350** specifically configured to store the at least one digital asset. By way of non-limiting example, the vault module **350** may comprise a hot, cold, hybrid, or other storage technology on and/or used with a blockchain and/or other distributed ledger system. By way of additional non-limiting example, the vault module **350** is configured to store the at least one digital asset according to a vault component consisting of one of the group selected from: hot storage, cold storage, and hybrid storage.

Accordingly, in view of the foregoing, seen in FIGS. 2-3 and made by way of non-limiting example, the user may be the only party able to withdraw the at least one digital asset from the vault module **350** according to the virtually protected loop formed via the executed smart contract between the parties. As may be understood, in at least some embodiments of the present invention, the at least one digital asset may be withdrawn via a withdrawal module **360,** which may be employed by a user to withdraw the at least one digital asset at any time upon request. In at least one embodiment of the present invention comprising the withdrawal module, the withdrawal module generally facilitates the withdrawal of digital assets via the initiation of a withdrawal request by the front end and a variable response by the back end. Additionally, in at least one such embodiment wherein the present invention comprises a withdrawal module, the front end may communicate with one or more of the back end and, in some instances, a digital asset support component, the digital asset support component operative to enable the secure movement, storage, and issuance of digital assets. By way of non-limiting example, and in such instances wherein the front end may communicate with one or more of the back end and the digital asset support component, the aforementioned components may, in some instances, communicate with one another to ensure the secure withdrawal of digital assets. Alternatively, and made by way of non-limiting example, the withdrawal module **360** may be configured to return the at least one digital asset to the user upon expiration or termination of the smart contract, according to the terms defined therein. In either instance, and made by way of additional non-limiting example, the verification module **320** may again be utilized to verify the user via one or more of a variety of verification protocols.

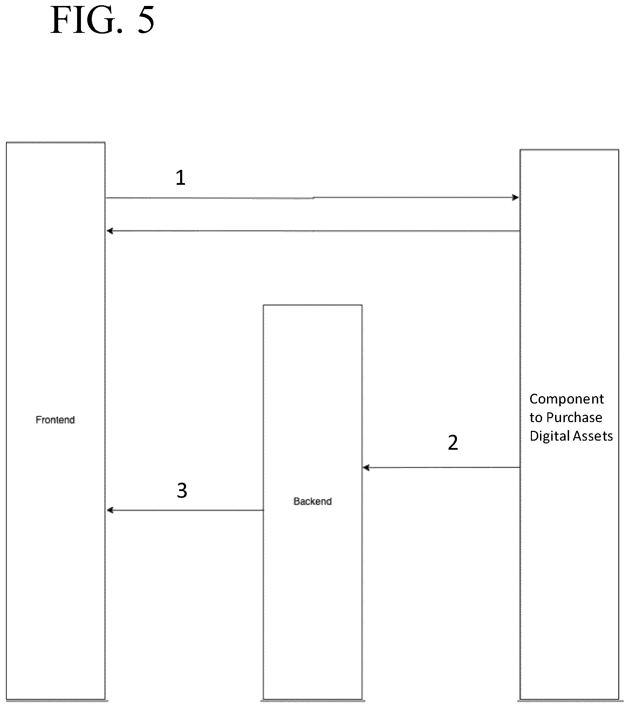

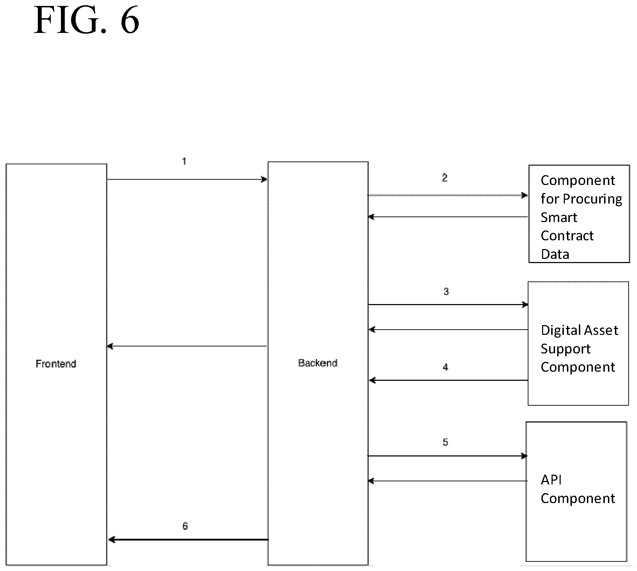

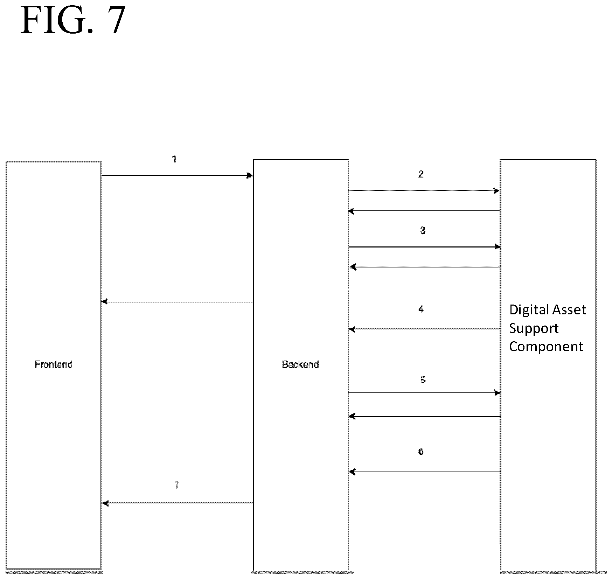

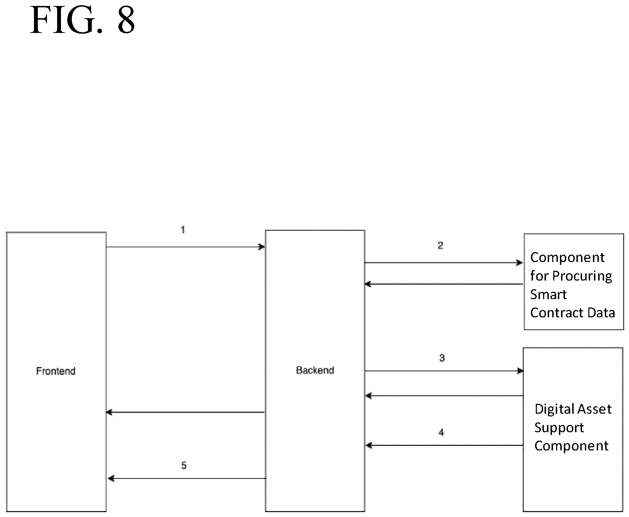

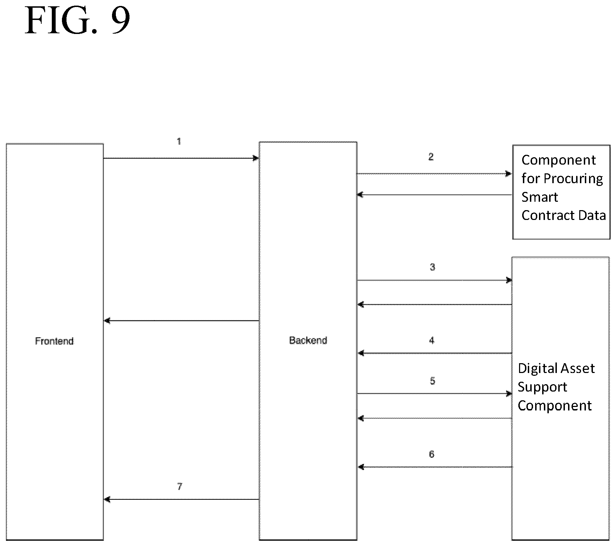

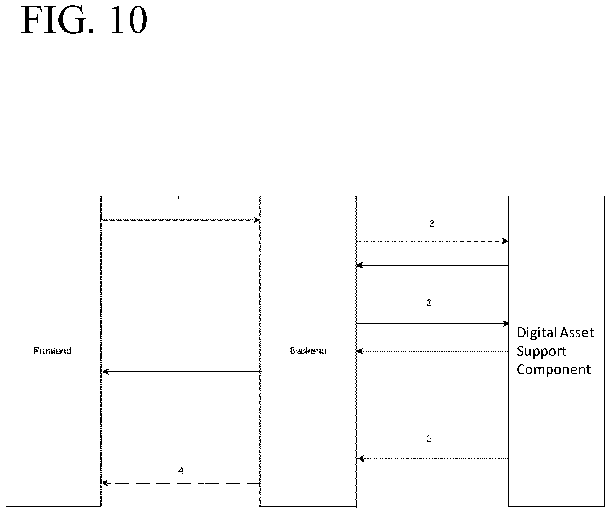

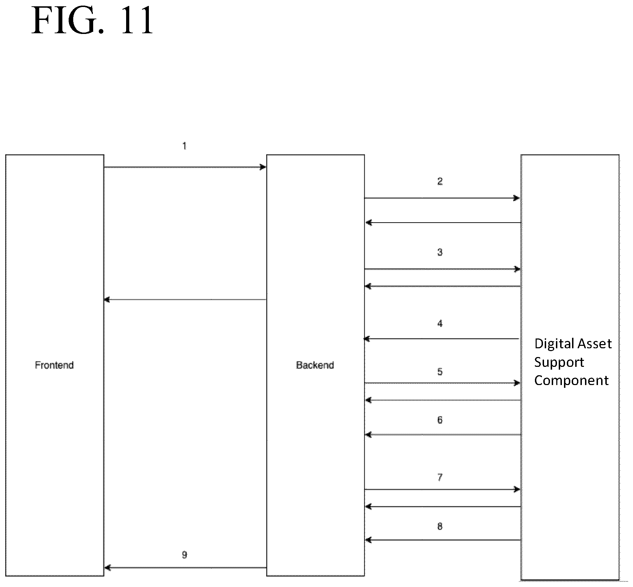

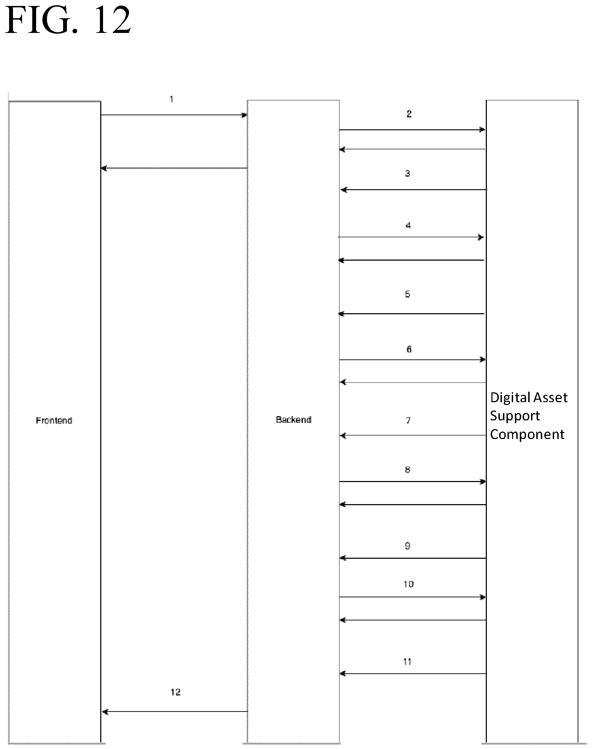

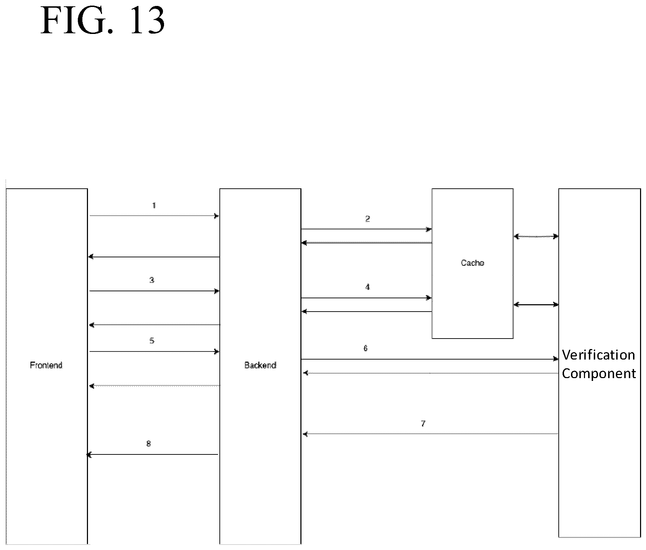

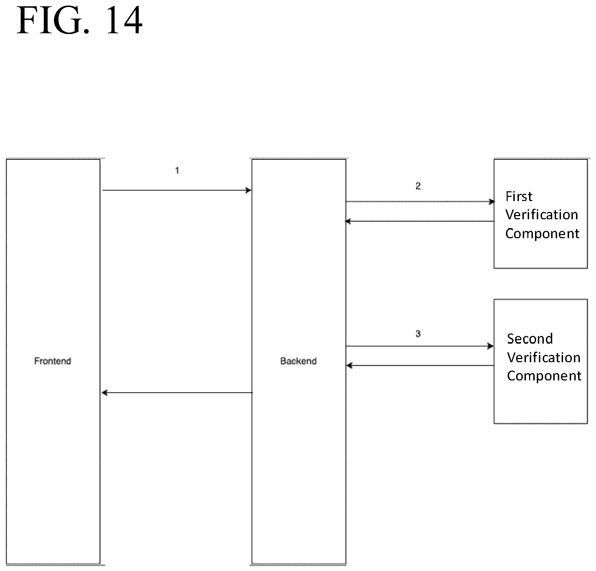

Furthermore, FIG. 5 is a schematic representation of one embodiment of the present invention in block form wherein the present invention is being utilized to purchase and/or acquire at least one digital asset; FIG. 6 is a schematic representation of one embodiment of the present invention in block form wherein the present invention is being utilized to exchange at least one native digital asset issued on a first blockchain for another at least one native digital asset issued on a second blockchain; FIG. 7 is a schematic representation of one embodiment of the present invention in block form wherein the present invention is being utilized to store at least one native digital asset; FIG. 8 is a schematic representation of one embodiment of the present invention in block form wherein the present invention is being utilized to exchange at least one native digital asset issued on a first blockchain for another at least one native digital asset issued on the same blockchain; FIG. 9 is a schematic representation of another embodiment of the present invention in block form wherein the present invention is being utilized to exchange at least one native digital asset issued on a first blockchain for another at least one native digital asset issued on the same blockchain; FIG. 10 is a schematic representation of one embodiment of the present invention in block form wherein the present invention is being utilized to withdraw at least one native digital asset; FIG. 11 is a schematic representation of one embodiment of the present invention in block form wherein the present invention is being utilized to withdraw at least one non-native digital asset; FIG. 12 is a schematic representation of one embodiment of the present invention in block form wherein the present invention is being utilized to withdraw at least one digital asset from a cold wallet; FIG. 13 is a schematic representation of one embodiment of the present invention in block form wherein the verification module is being utilized to verify a user; and FIG. 14 is a schematic representation of another embodiment of the present invention in block form wherein the verification module is being utilized to verify a user.

Since many modifications, variations and changes in detail can be made to the described embodiments of the invention, it is intended that all matters in the foregoing description and shown in the accompanying drawings be interpreted as illustrative and not in a limiting sense. Thus, the scope of the invention should be determined by the appended claims and their legal equivalents.

## Claims

1. A system for the storage and retrieval of digital assets comprising:
a processor disposed in connection with a memory having computer-readable instructions stored thereon, said processor configured to execute a storage system, said storage system comprising:
an initiation module configured to register a user;
a verification module configured to verify the identity of said user;
a bailee module configured to receive at least one digital asset;
a contracting module configured to execute at least one smart contract between said user and at least one custodian;
a vault module configured to store the at least one digital asset; and
a withdrawal module configured to return the at least one digital asset to said user.

2. The system as recited in claim 1, wherein said initiation module is configured to receive contact information and billing information related to said user.

3. The system recited in claim 1, wherein said at least one smart contract is configured to tie both said user and said at least one custodian to a single wallet.

4. The system as recited in claim 3, wherein only said user is configured to receive said at least one digital asset.

5. The system as recited in claim 1, wherein said at least one smart contract is recorded on a distributed ledger.

6. The system as recited in claim 1, wherein said vault module is configured to store said at least one digital asset according to a vault component consisting of one of the group selected from: hot storage, cold storage, and hybrid storage.

7. The system as recited in claim 1, wherein said withdrawal module is configured to be initiated upon the termination of the smart contract.

8. The system as recited in claim 1, wherein said withdrawal module may be initiated at any time by said user.

9. A system for the storage and retrieval of digital assets comprising:
a processor disposed in connection with a memory having computer-readable instructions stored thereon, said processor configured to execute a storage system, said storage system comprising:
an initiation module configured to register a user;
a verification module configured to verify the identity of said user, said verification module comprising a whitelisting submodule, said whitelisting submodule configured to further verify the identity of said user;
a bailee module configured to receive at least one digital asset;
a contracting module configured to execute at least one smart contract between said user and said custodian;
a vault module configured to store the at least one digital asset according to said at least one smart contract; and
a withdrawal module configured to the said at least one digital asset to said user.

10. The system as recited in claim 9, wherein said initiation module is configured to receive contact information and billing information related to said user.

11. The system recited in claim 9, wherein said at least one smart contract is configured to tie both said user and said at least one custodian to a single wallet.

12. The system as recited in claim 11, wherein only said user is configured to receive said at least one digital asset.

13. The system as recited in claim 9, wherein said at least one smart contract is recorded on a distributed ledger.

14. The system as recited in claim 9, wherein said vault module is configured to store said at least one digital asset according to a vault component consisting of one of the group selected from: hot storage, cold storage, and hybrid storage.

15. The system as recited in claim 9, wherein said withdrawal module is configured to be initiated upon the termination of the smart contract.

16. The system as recited in claim 9, wherein said withdrawal module may be initiated at any time by said user.

17. A system for the storage and retrieval of digital assets comprising:
a software application configured to be executed on a memory of a client device,
said software application operative to register a user,
said software application further operative, prior to receiving at least one digital asset, to verify the identity of said user,
said software application further operative to receive the at least one digital asset,
said software application further operative, prior to storing the at least one digital asset, to execute at least one smart contract between said user and said custodian,
said software application further operative to store the at least one digital asset according to said at least one smart contract, and
said software application further operative to return the at least one digital asset to said user.

18. The system as recited in claim 17, wherein said software application, prior to receiving the at least one digital asset, is operative to emit a verification notification detectable immediately.

19. The system as recited in claim 18, wherein said verification notification is a multi-factor authentication notification.

20. The system as recited in claim 17, wherein said software application, prior to receiving the at least one digital asset, is operative to whitelist said user's wallet.

21. The system as recited in claim 20, wherein said software application, prior to receiving the at least one digital asset, is operative to whitelist said user's hot wallet.
